# EUROPÄISCHE PATENTANMELDUNG

(11) **EP 4 553 930 A2**
(43) Veröffentlichungstag der Anmeldung: **14.05.2025**
(21) Anmeldenummer: 24201507.1
(22) Anmeldetag: 20.09.2024
(51) Int. Cl.: H01M 4/62, H01M 10/04, H01M 50/46, H01M 50/474, H01M 50/477, H01M 50/486, H01M 10/0585

(54) **ELEKTRODEN-/SEPARATORSTAPEL FÜR EINE BATTERIEZELLE SOWIE VERFAHREN ZUR HERSTELLUNG EINES SOLCHEN ELEKTRODEN-/SEPARATORSTAPELS**

(30) Priorität: 08.11.2023 DE 102023211038
(71) Anmelder: PowerCo SE, 38239 Salzgitter (DE)
(72) Erfinder: Stühm-van Doren, Kai, 38527 Meine (DE); Klinge, Jonas, 38300 Wolfenbüttel (DE)
(74) Vertreter: FDST Patentanwälte

(57) **Zusammenfassung**

Die Erfindung betrifft einen Elektroden-/Separatorstapel für eine Batteriezelle, mit zumindest einer Elektrode, insbesondere Kathode (K), und einer Gegenelektrode, insbesondere Anode (A), wobei die Elektrode (K) Bestandteil eines laminierten Verbunds (V) ist, bei dem beidseitig auf die Elektrode (K) jeweils ein Separator (S) laminiert ist, und wobei die beiden Separatoren (S) die Elektrode (K) mit einem Überstand (a) randseitig überragen. Erfindungsgemäß ist ein randseitiger Spalt (9) zwischen den beiden Separator-Überständen (a) mit einem Kantenschutzfilm (11) insbesondere vollständig gefüllt.

## Beschreibung

Die Erfindung betrifft einen Elektroden-/Separatorstapel für eine Batteriezelle nach dem Oberbegriff des Anspruches 1 sowie ein Verfahren zur Fertigung eines solchen Elektroden-/Separatorstapels gemäß dem Oberbegriff des Anspruches 10.

Die Herstellung eines solchen Elektroden-/Separatorstapels kann durch Einzelblattstapeln erfolgen. Beim Einzelblattstapeln ist die Ablagegenauigkeit der Elektroden- und Separatorblätter im Elektroden-/Separatorstapel von großer Bedeutung für die Sicherheit und Leistungsfähigkeit der Batteriezelle. So nimmt die elektrochemische Leistungsfähigkeit der Batteriezelle mit geringerer Elektroden-Überdeckung im Betrieb schneller ab. Zudem kann eine fehlerhafte Blatt-Ablage zu einem direkten Kontakt der Anode und Kathode führen, wodurch ein Kurzschluss sowie ein Batteriezellen-Ausfall auslösbar ist. Um eine vollständige Überdeckung der Anode und Kathode trotz Ablageungenauigkeiten zu verbessern, kann beispielhaft die Anode im Elektroden-/Separatorstapel umlaufend um ein Aufmaß (zum Beispiel 1,5 mm) größer sein als die Kathode sowie der Separator ein Aufmaß größer sein als die Anode.

Das oben erwähnte Einzelblattstapeln wird fertigungstechnisch aufwendig mittels Handhabungseinrichtungen durchgeführt. Diese erhalten ihre Koordinaten auf Basis einer Bildverarbeitung, bei der nach jeder Blatt-Ablage die Position jedes abgelegten Elektroden-/Separator-Blattes optisch erfasst und ausgewertet wird, um die Ablagegenauigkeit zu bestimmen.

Bei einer solchen optischen Erfassung der Ablagegenauigkeit ist eine nach dem Stapelprozess erfolgende Positionskorrektur der bereits abgelegten Elektroden-/Separatorblätter nicht vorgesehen, so dass der Ablagefehler zwar erkannt wird, jedoch nachträglich nicht mehr beseitigt werden kann. Zudem ist die mithilfe von Bildverarbeitung durchgeführte Stapelfertigung messtechnisch aufwändig und kann systembedingt zu Positionsabweichungen der im Elektroden-/Separatorstapel gestapelten Einzelblätter führen.

Aus der US 2022/0148821 A1 ist eine Batteriezelle bekannt, die ein inneres Element aufweist, das eine erste Hauptoberfläche, eine zweite Hauptoberfläche, eine erste Seitenfläche, eine zweite Seitenfläche, eine erste Endfläche und eine zweite Endfläche aufweist. Ferner ist eine erste innere Elektrode, die sich bis zur ersten Endfläche erstreckt, eine zweite Elektrode, die sich bis zur zweiten Endfläche erstreckt, eine Separatorschicht, die zwischen der ersten und der zweiten Elektrode angeordnet ist, und eine elektrolytische Lösung bereitgestellt. Außerdem ist die erste Elektrode an der ersten Endfläche und die zweite Elektrode an der zweiten Endfläche angeordnet. Die erste Elektrode, die zweite Elektrode und die Separatorschicht sind zu einem einstückigen Verbund zusammengefügt.

Aus DE 10 2016 217 397 A1 ist ein Elektrodenstapel bekannt, der an wenigstens einer Blattkantenseite mit einer elektrisch isolierenden Beschichtung versehen ist. Diese wird aus der flüssigen Phase beschichtet und erstreckt sich über die gesamte Höhe des Elektrodenstapels.

Aus der JP 5375263 B2 ist ein Herstellungsverfahren und einer Herstellungsvorrichtung für eine Batterie mit hoher Batterieleistung bekannt, bei der eine Vielzahl von Laminate gebildet werden, die aus einer Elektrode und einem Separator bestehen.

Die Aufgabe der Erfindung besteht darin, einen Elektroden-/Separatorstapel sowie ein Verfahren zur Herstellung eines solchen Elektroden-/Separatorstapels bereitzustellen, bei dem der Stapelvorgang im Vergleich zum Stand der Technik fertigungstechnisch einfacher sowie mit größerer Ablagegenauigkeit durchführbar ist.

Die Aufgabe ist durch die Merkmale des Anspruches 1 oder 10 gelöst. Bevorzugte Weiterbildungen der Erfindung sind in den Unteransprüchen offenbart.

Die Erfindung geht von einem Elektroden-/Separatorstapel für eine Batteriezelle aus, der zumindest aus einer Elektrode, insbesondere Kathode, und einer Gegenelektrode, insbesondere Anode, aufgebaut ist. Die Elektrode ist Bestandteil eines laminierten Verbunds, bei dem beidseitig auf die Elektrode jeweils ein Separator laminiert ist. Die beiden Separatoren überragen die Elektrode randseitig mit einem Überstand. Gemäß dem kennzeichnenden Teil des Anspruches 1 ist ein randseitiger Spalt zwischen den beiden Separator-Überständen mit einem Kantenschutzfilm bevorzugt vollständig gefüllt. Der Kantenschutzfilm kann in der Dickenrichtung des laminierten Verbunds betrachtet dieselbe Materialstärke aufweisen wie die Elektrode. Auf diese Weise sind die Ecken und Kanten der Elektrode mithilfe des Kantenschutzfilms vor äußeren mechanischen Belastungen geschützt. Der Kantenschutzfilm kann während eines Ausrichtprozesses, der am fertiggestellten Elektroden-/Separatorstapel durchgeführt wird, eine formstabile Anschlagfläche bereitstellen, mittels der eine beschädigungsfreie Querverlagerung der Elektrode im Elektroden-/Separatorstapel ermöglicht ist. Zudem wirkt der Kantenschutzfilm als eine elektrische Isolierung, mit deren Hilfe die elektrische Sicherheit der Batteriezelle erhöht ist.

Der erfindungsgemäße Elektroden-/Separatorstapel kann nach Art eines Einzelblattstapelns hergestellt werden, bei dem der laminierte Verbund sowie die Gegenelektrode als Einzelblätter übereinander gestapelt werden.

In einer technischen Umsetzungen kann jeder der Separatoren eine Adhäsionsschicht aufweisen, mittels der die Separatoren in einem Laminierprozess auf die Elektrode laminierbar sind, und zwar unter Bildung des laminierten Verbunds. Auf diese Weise sind die beiden Separatoren sowie die zwischengeordnete Elektrode bereits vor Durchführung des Stapelprozesses zu einer einstückigen Baueinheit zusammengefügt, wodurch die Stapelgenauigkeit im Elektroden-/Separatorstapel erhöht ist, und zwar im Vergleich zu einem Elektroden-/Separatorstapel, bei dem die Elektroden als Einzelblätter gestapelt werden.

Die Elektrode und/oder die Gegenelektrode sind aus einer Substratfolie aufgebaut. Diese ist ein- oder beidseitig mit einem Elektroden-Aktivmaterial beschichtet. Das Aktivmaterial weist einen Binder, insbesondere einen Polymer-Binder, nämlich bevorzugt PVDF, auf. Um eine ungünstige Materialpaarung zwischen dem Aktivmaterial und dem Kantenschutzfilm sowie gegebenenfalls der Adhäsionsschicht zu vermeiden, ist sowohl der Aktivmaterial-Binder als auch der Kantenschutzfilm und gegebenenfalls auch die Adhäsionsschicht materialgleich ausgebildet. Das heißt, dass sowohl die Adhäsionsschicht als auch der Kantenschutzfilm den gleichen Materialaufbau aufweisen wie der Aktivmaterial-Binder. Dadurch ist eine Beständigkeit des Kantenschutzfilms gegenüber dem Elektrolyt gewährleistet. Zudem ist gewährleistet, dass die Materialpaarung zwischen Kantenschutzfilm und Aktivmaterial-Binder elektrochemisch stabil beziehungsweise beständig ist.

Der laminierte Verbund, bestehend aus den beiden Separatoren sowie der zwischengeordneten Elektrode, kann als ein rechteckförmiger flächiger Zuschnitt bereitgestellt sein. An dessen einer Zuschnitt-Seite (nachfolgend "Ableiterfahnen-Seite") kann die Substratfolie der Elektrode mit einer Ableiterfahne seitlich nach außen über die Separator-Ränder hinaus verlängert sein. Der mit dem Kantenschutzfilm gefüllte randseitige Spalt kann zumindest entlang der von der Ableiterfahnen-Seite abgewandten Zuschnitt-Seite sowie entlang der beiden zur Ableiterfahnen-Seite rechtwinkligen Zuschnitt-Seiten des laminierten Verbunds durchgängig verlaufen. An der Ableiterfahnen-Seite selbst ist kein Kantenschutzfilm bereitgestellt, damit die Ableiterfahne aus dem Verbund herausführbar ist. Auf diese Weise wird eine Aufdickung (bedingt durch den Kantenschutzfilm) in Höhe der Ableiterfahne vermieden, die sich dann später bemerkt machen würde. Es ist daher vorteilhaft, wenn der Kantenschutzfilm nur an drei der insgesamt vier Zuschnitt-Seiten vorhanden ist, damit keine Verdickung auftreten kann.

Um eine vollständige Überdeckung der Elektrode (das heißt Kathode) und der Gegenelektrode (das heißt Anode) trotz Ablageungenauigkeiten zu ermöglichen, kann bevorzugt die Gegenelektrode umlaufend um ein Aufmaß, zum Beispiel um 1 bis 3 mm größer dimensioniert sein als die Elektrode. Bevorzugt können die Gegenelektrode und die Separatoren als deckungsgleiche Blatt-Zuschnitte gefertigt sein. Das heißt, dass die Gegenelektrode - mit Ausnahme ihrer Ableiterfahne - flächengleich sowie konturgleich wie der Separator dimensioniert ist, so dass die Ecken und Kanten der Gegenelektrode in Stapelrichtung in Flucht mit den Ecken und Kanten der Separatoren ausrichtbar sind.

Ein Verfahren zur Fertigung des Elektroden-/Separatorstapels ist in einen Stapelprozess und in einen nachfolgenden Ausrichtprozess unterteilbar. Im Stapelprozess wird der laminierte Verbund, bestehend aus Separatoren und Elektrode, sowie die Gegenelektrode nach Art einer Einzelblattstapelung übereinander gestapelt. Im nachfolgenden Ausrichtprozess sind der laminierte Verbund sowie die Gegenelektrode in Stapelrichtung in Flucht zueinander ausrichtbar. Aufgrund der Bereitstellung des erfindungsgemäßen Kantenschutzfilms ist der laminierte Verbund formstabil gestaltet, wodurch eine beschädigungsfreie Positionskorrektur des laminierten Verbunds quer zur Stapelrichtung durchführbar ist. Ein derart formstabiler laminierter Verbund bietet auch der benachbarten Gegenelektrode einen stabilen Gegenhalt beziehungswiese eine stabile Abstützbasis, wodurch eine Positionskorrektur der Gegenelektrode beschädigungsfrei durchführbar ist. Bevorzugt kann im Ausrichtprozess zumindest ein Queranschlag, insbesondere Schieber, zum Einsatz kommen. Mit dem Queranschlag kann eine Positionskorrektur eines quer zur Stapelrichtung lageversetzten Stapelbestandteils, das heißt der laminierte Verbund oder die Gegenelektrode durchgeführt werden, das heißt eine Ausrichtung in Flucht mit den anderen Stapelbestandteilen.

Der Kantenschutzfilm kann in beliebig geeigneter Weise auf den laminierten Verbund aufgebracht werden. Beispielhaft kann der Kantenschutzfilm in einem Beschichtungsprozess auf den laminierten Verbund aufgebracht werden, bei dem eine viskose Ausgangskomponente des Kantenschutzfilms direkt in den randseitigen Spalt des laminierten Verbunds appliziert wird. In einer demgegenüber vorteilhaften alternativen Variante kann der Kantenschutzfilm auch als separate Komponente eingebracht werden, das heißt als ein Material fester Phase (zum Beispiel Folie, Klebefilm...).

Nachfolgend ist ein Ausführungsbeispiel der Erfindung anhand der beigefügten Figuren beschrieben.

Es zeigen:

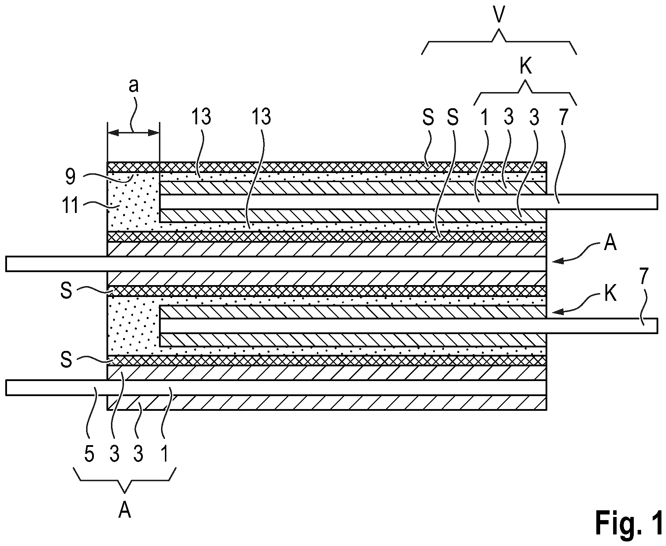

- Figuren 1 bis 5: jeweils unterschiedliche Ansichten, anhand derer der Aufbau sowie die Herstellung eines erfindungsgemäßen Elektroden-/Separatorstapels veranschaulicht sind.

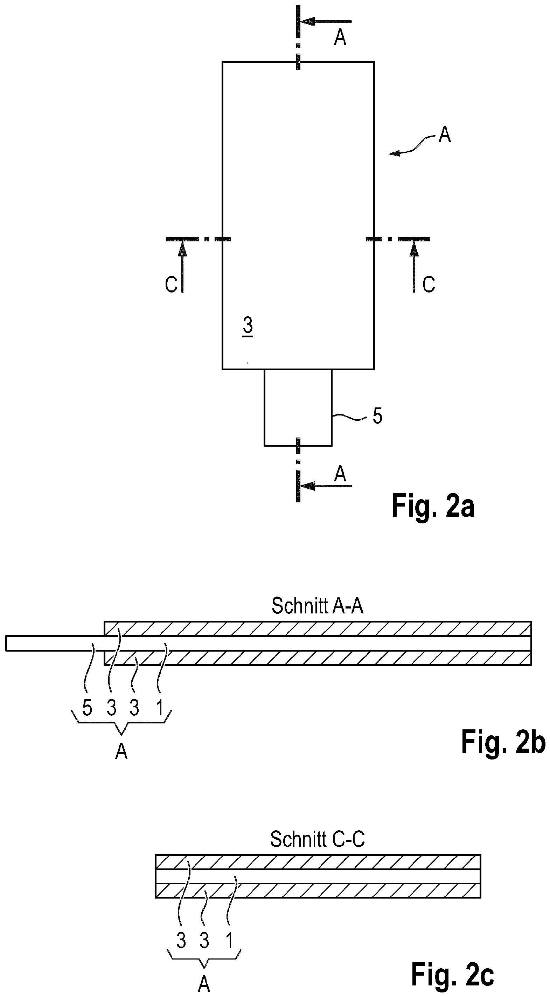

In der Figur 1 ist ein fertiggestellter Elektroden-/Separatorstapel für eine Batteriezelle gezeigt. Dieser weist in Stapelrichtung in einer Reihenfolge von unten nach oben eine Anode A, eine Kathode K sowie eine weitere Anode A und eine Kathode K mit jeweils zwischengeordneten Separatoren S auf. Die Anode A ist in den Figuren 2a bis 2c jeweils in Alleinstellung angedeutet. Demnach ist die Anode A ein rechteckförmiger Blattzuschnitt, der aus einer Substratfolie 1 aufgebaut ist. Diese ist beidseitig mit Aktivmaterial 3 beschichtet. Die Substratfolie 1 ist an einer Rechteck-Seite nach außen mit einer Anoden-Ableiterfahne 5 verlängert.

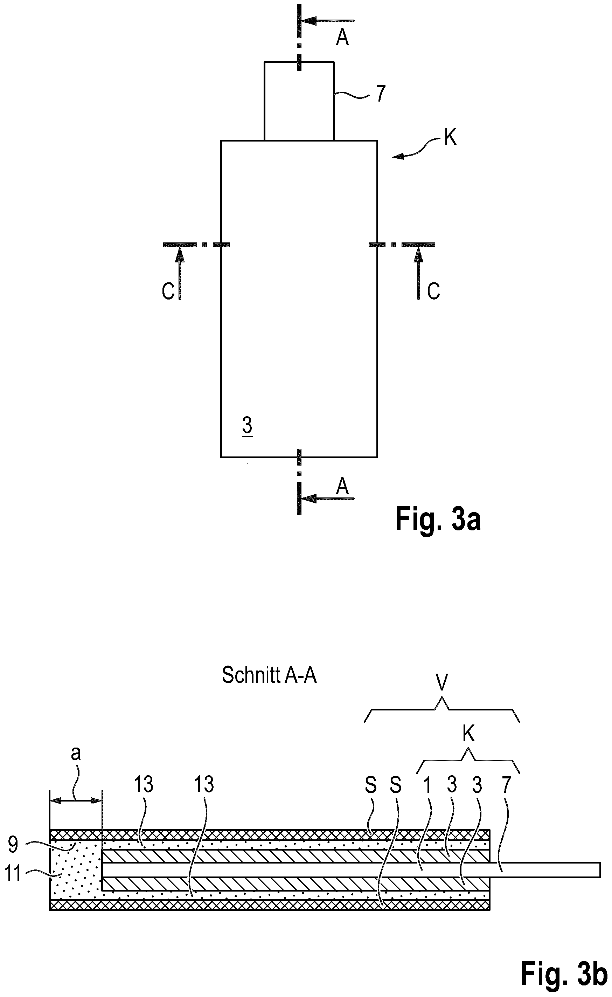

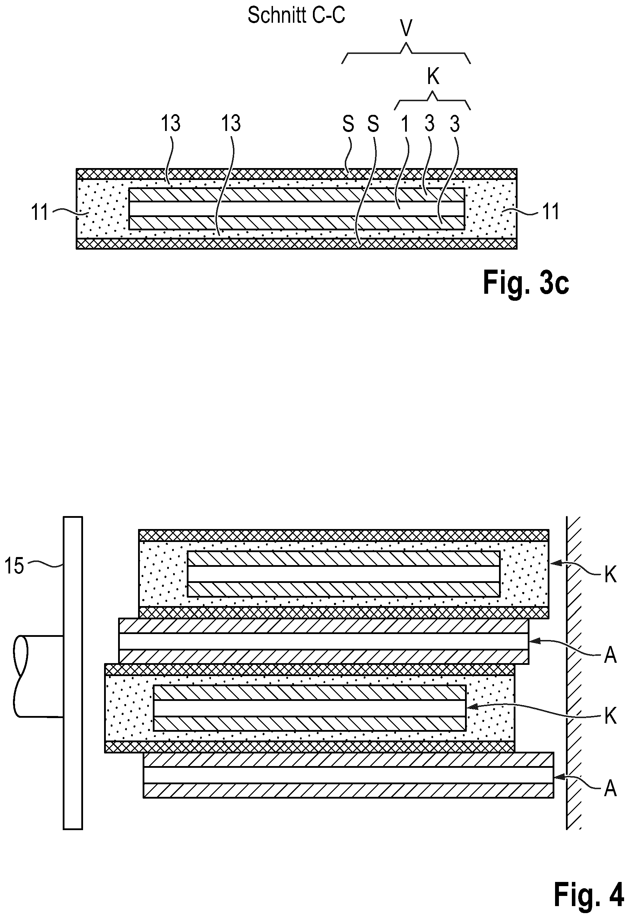

Die Kathode K ist gemäß den Figuren 3a bis 3c ebenfalls ein rechteckförmiger Blattzuschnitt, der aus einer Substratfolie 1 aufgebaut ist, die beidseitig mit Aktivmaterial 3 beschichtet ist. Die Substratfolie 1 der Kathode K ist an einer Rechteck-Seite mit einer Kathoden-Ableiterfahne 7 verlängert. Im Unterschied zur Anode A ist die Kathode K gemäß den Figuren 3a bis 3c vor Durchführung eines Stapelprozesses nicht als ein Einzelblatt bereitgestellt. Vielmehr ist die Kathode K zusammen mit den Separatoren S Bestandteil eines laminierten Verbunds V, bei dem Separatoren S jeweils beidseitig unter Druck und Wärme auf die Kathode K laminiert worden sind.

Im fertiggestellten Elektroden-/Separatorstapel (Figur 1) ragen sämtliche Anoden-Albeiterfahnen 5 von der linken Stapelseite ab, während sämtliche Kathoden-Ableiterfahnen 7 von der rechten Stapelseite abragen.

Wie aus der Figur 1 weiter hervorgeht, ist die Anode A um ein umlaufenden Aufmaß a von zum Beispiel 1 bis 3 mm größer dimensioniert als die Kathode K. Dadurch kann eine Überdeckung der Anode A und der Kathode K trotz Ablageungenauigkeiten gewährleistet werden. Zudem sind die Separatoren S und die Anode A als deckungsgleiche Blatt-Zuschnitte realisiert; das heißt die Separatoren S und die Anode A sind flächengleich sowie konturgleich mit Ausnahme der Anoden-Ableiterfahne 5, so dass im Elektroden-/Separatorstapel (Figur 1) die Ecken und die Kanten der Anoden A in Stapelrichtung in Flucht mit den Ecken und Kanten der Separatoren S ausgerichtet sind.

Im laminierten Verbund V überragen die beiden Separatoren S die Kathode K mit einem Überstand, der identisch mit dem Aufmaß a ist. Auf diese Weise bildet sich ein randseitiger Spalt 9, der von den Separator-Überständen a und der Kathode K begrenzt ist. Der randseitige Spalt 9 ist vollständig mit einem Kantenschutzfilm 11 gefüllt. Dieser weist, in der Dickenrichtung des laminierten Verbunds V betrachtet, dieselbe Materialstärke auf wie die Kathode K. Die beiden Separatoren S sind jeweils mit einer Adhäsionsschicht 13 ausgebildet, mit deren Hilfe die Separatoren S in einem Laminierprozess unter Druck und Wärme auf die Kathode K laminiert werden, wodurch sich der laminierte Verbund V ergibt.

Der Kantenschutzfilm 11 bildet einen mechanischen Schutz der Ecken und Kanten des laminierten Verbunds V. Zudem wirkt der Kantenschutz 11 als eine elektrische Isolierung, die einen direkten Kontakt zwischen Anode A und Kathode K verhindert. Ferner steigert der Kantenschutzfilm 11 die Formstabilität des laminierten Verbunds V an dessen Ecken und Kanten.

Der Kantenschutzfilm 11 ist aus einem Polymermaterial gefertigt. Um eine ungünstige Materialpaarung zwischen dem Aktivmaterial-Binder, das heißt PVDF, und dem Kantenschutzfilm 11 zu vermeiden, ist auch der Kantenschutzfilm 11 aus PVDF gefertigt. Dies gewährleistet zudem eine chemische Beständigkeit gegenüber dem Elektrolyt in der Batteriezelle. Es ist hervorzuheben, dass die Erfindung nicht auf einen Kantenschutzfilm 11 aus PVDF beschränkt ist; vielmehr ist der Kantenschutzfilm 11 anstelle von PVDF auch aus anderen geeigneten Materialen herstellbar.

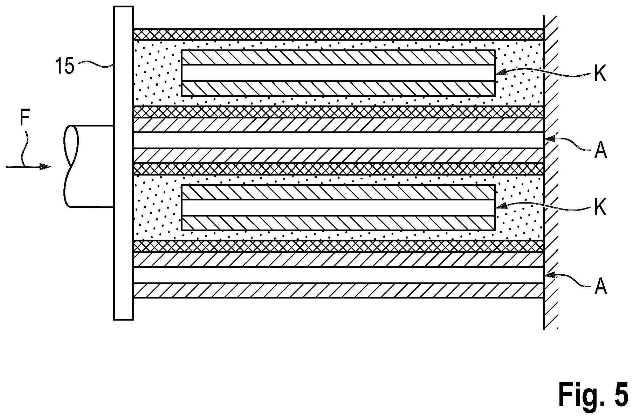

Der Elektroden-/Separatorstapel (Figur 1) wird in einem Stapelprozess sowie einem nachfolgenden Ausrichtprozess (Figuren 4 und 5) hergestellt. Im Stapelprozess wird der laminierte Verbund V und die Anode A wechselseitig übereinander gestapelt. Anschließend erfolgt im Ausrichtprozess (Figuren 4 und 5) eine Positionskorrektur, bei der die Stapelbestandteile, das heißt der laminierte Verbund V und die Anode A, mithilfe eines Schiebers 15 in Flucht mit den anderen Stapelbestandteilen ausrichtbar sind. Es ist hervorzuheben, dass die Erfindung nicht auf die Verwendung des in den Figuren gezeigten Schiebers 15 beschränkt ist. Vielmehr kann die Ausrichtung auch über die Schwerkraft erfolgen und damit selbstzentrierend ausgeführt werden. Alternativ dazu kann die Ausrichtfunktion auch mittels einer Vibrationsplatte mit festen Anschlägen bewerkstelligt werden.

Die mithilfe des Schiebers 15 quer zur Stapelrichtung auf den Elektroden-/Separatorstapel wirkende Ausricht-Kraft F kann gegebenenfalls auch unter Schwerkraftwirkung beaufschlagt werden.

Mit der Erfindung kann unabhängig von einer Bildverarbeitung sowie einer Handhabungsvorrichtung eine einwandfreie Stapelgenauigkeit erzielt werden. Die Stapelgenauigkeit wird mithilfe kostengünstiger Technologie (das heißt Schieber 15) auf ein hohes Niveau gehoben. Zudem ist die Stapelgenauigkeit nach dem Stapelprozess, das heißt im Ausrichtprozess einstellbar.

### Bezugszeichenliste

- 1: Substratfolie
- 3: Aktivmaterial
- 5: Anoden-Ableiterfahne
- 7: Kathoden-Ableiterfahne
- 9: randseitiger Spalt
- 11: Kantenschutzfilm
- 13: Adhäsionsschicht
- 15: Queranschlag
- A: Anode
- K: Kathode
- V: laminierter Verbund
- F: Ausricht-Kraft
- a: Aufmaß, Separatorüberstand

## Patentansprüche

1. Elektroden-/Separatorstapel für eine Batteriezelle, mit zumindest einer Elektrode, insbesondere Kathode (K), und einer Gegenelektrode, insbesondere Anode (A), wobei die Elektrode (K) Bestandteil eines laminierten Verbunds (V) ist, bei dem beidseitig auf die Elektrode (K) jeweils ein Separator (S) laminiert ist, und wobei die beiden Separatoren (S) die Elektrode (K) mit einem Überstand (a) randseitig überragen, **dadurch gekennzeichnet, dass** ein randseitiger Spalt (9) zwischen den beiden Separator-Überständen (a) mit einem Kantenschutzfilm (11) insbesondere vollständig gefüllt ist, und dass insbesondere in der Dickenrichtung des laminierten Verbunds (V) betrachtet der Kantenschutzfilm (11) und die Elektrode (K) dieselbe Materialstärke aufweisen.

2. Elektroden-/Separatorstapel nach Anspruch 1, **dadurch gekennzeichnet, dass** jeder der Separatoren (S) eine Adhäsionsschicht (13) aufweist, mittels der die Separatoren (S) in einem Laminierprozess auf die Elektrode (K) laminierbar sind, und zwar unter Bildung des laminierten Verbunds (V).

3. Elektroden-/Separatorstapel nach Anspruch 1 oder 2, **dadurch gekennzeichnet, dass** die Elektrode (K) und/oder die Gegenelektrode (A) aus einer Substratfolie (1) aufgebaut sind, die ein- oder beidseitig mit Aktivmaterial (3) beschichtet ist, und dass insbesondere das Aktivmaterial (3) einen Binder, insbesondere einen Polymer-Binder, bevorzugt PVDF, aufweist, und dass insbesondere der Aktivmaterial-Binder, der Kantenschutzfilm (11) und/oder die Adhäsionsschicht (13) materialgleich ausgebildet sind.

4. Elektroden-/Separatorstapel nach einem der vorhergehenden Ansprüche, **dadurch gekennzeichnet, dass** der laminierte Verbund (V) ein rechteckförmiger flächiger Zuschnitt ist, an dessen einer Zuschnitt-Seite, das heißt die Ableiterfahnen-Seite, die Substratfolie (1) der Elektrode (K) mit einer Ableiterfahne (5, 7) seitlich nach außen über die Separator-Ränder hinaus verlängert ist, und dass insbesondere der mit dem Kantenschutzfilm (11) gefüllte randseitige Spalt (9) zumindest entlang der von der Ableiterfahne (7) abgewandten Zuschnitt-Seite sowie insbesondere entlang der beiden zur Ableiterfahnen-Seite rechtwinkligen Seiten des laminierten Verbunds (V) durchgängig verläuft.

5. Elektroden-/Separatorstapel nach Anspruch 4, **dadurch gekennzeichnet, dass** der mit dem Kantenschutzfilm (11) gefüllte randseitige Spalt (9) sich - mit Ausnahme der Ableiterfahnen-Seite - umlaufend entlang sämtlicher Zuschnitt-Seiten des laminierten Verbunds (V) erstreckt.

6. Elektroden-/Separatorstapel nach einem der vorhergehenden Ansprüche, **dadurch gekennzeichnet, dass** die Separatoren (S) und die Gegenelektrode (A) deckungsgleiche Blatt-Zuschnitte sind, das heißt flächengleich sowie konturgleich, mit Ausnahme der Ableiterfahne (5) der Gegenelektrode (A), so dass die Ecken und Kanten der Gegenelektrode (A) in Stapelrichtung in Flucht mit den Ecken und Kanten der Separatoren (S) ausrichtbar sind.

7. Elektroden-/Separatorstapel nach einem der vorhergehenden Ansprüche, **dadurch gekennzeichnet, dass** ein Verfahren zur Fertigung des Elektroden-/Separatorstapels einen Stapelprozess aufweist, in dem der laminierte Verbund (V) und die Gegenelektrode (A) in Stapelrichtung lose übereinander stapelbar sind, und einen Ausrichtprozess aufweist, in dem der laminierte Verbund (V) und die Gegenelektrode (A) in Stapelrichtung in Flucht zueinander ausrichtbar sind.

8. Elektroden-/Separatorstapel nach Anspruch 7, **dadurch gekennzeichnet, dass** im Ausrichtprozess zumindest ein Queranschlag (15), insbesondere Schieber, zum Einsatz kommt, mit dem ein quer zur Stapelrichtung lageversetzter Stapelbestandteil, das heißt der laminierte Verbund (V) oder die Gegenelektrode (A), in Flucht mit den anderen Stapelbestandteilen ausrichtbar ist.

9. Elektroden-/Separatorstapel nach einem der vorhergehenden Ansprüche, **dadurch gekennzeichnet, dass** der Kantenschutzfilm (11) in einem Beschichtungsprozess auf den laminierten Verbund (V) aufbringbar ist, bei dem eine viskose Ausgangskomponente des Kantenschutzfilms (11) direkt in den randseitigen Spalt (9) des laminierten Verbunds (V) applizierbar ist.

10. Verfahren zur Fertigung eines Elektroden-/Separatorstapels, insbesondere nach einem der vorhergehenden Ansprüchen, für eine Batteriezelle, mit zumindest einer Elektrode, insbesondere Kathode (K), und einer Gegenelektrode, insbesondere Anode (A), wobei die Elektrode (K) Bestandteil eines laminierten Verbunds (V) ist, bei dem beidseitig auf die Elektrode (K) jeweils ein Separator (S) laminiert ist, und wobei die beiden Separatoren (S) die Elektrode (K) mit einem Überstand (a) randseitig überragen, **dadurch gekennzeichnet, dass** ein randseitiger Spalt (9) zwischen den beiden Separator-Überständen (a) mit einem Kantenschutzfilm (11) insbesondere vollständig gefüllt wird, und dass insbesondere in der Dickenrichtung des laminierten Verbunds (V) betrachtet der Kantenschutzfilm (11) und die Elektrode (K) dieselbe Materialstärke aufweisen.
